# EUROPÄISCHE PATENTSCHRIFT

(11) **EP 2 427 533 B1**
(45) Veröffentlichungstag und Bekanntmachung des Hinweises auf die Patenterteilung: **14.08.2019**
(21) Anmeldenummer: 10723913.9
(22) Anmeldetag: 04.05.2010
(51) Int. Cl.: C10G 1/00, C10G 1/02, C10G 1/10

(54) **PYROLYSEVERFAHREN UND VORRICHTUNG ZUM DURCHFÜHREN DES VERFAHRENS**
PYROLYSIS METHOD AND APPARATUS FOR CARRYING OUT THE PROCESS
PROCÉDÉ DE PYROLYSE ET DISPOSITIF POUR LA MISE EN OEUVRE DU PROCÉDÉ

(30) Priorität: 05.05.2009 DE 102009019734
(43) Veröffentlichungstag der Anmeldung: 14.03.2012
(73) Patentinhaber: Pyrum Innovations International S.A., 1150 Luxembourg (LU)
(72) Erfinder: SCHULZ, Klaus-Peter, 79424 Auggen (DE)
(74) Vertreter: Vièl, Christof
(86) Internationale Anmeldenummer: PCT/DE2010/000499
(87) Internationale Veröffentlichungsnummer: WO 2010/127664

(56) Entgegenhaltungen:
- EP-A1- 1 052 279
- WO-A1-00/53385
- WO-A1-00/64997
- DE-A1- 19 620 378
- DE-A1- 19 707 306
- US-A- 4 313 011
- US-A- 4 648 328
- US-A- 4 740 270

## Beschreibung

Die Erfindung betrifft ein Pyrolyseverfahren zur fraktionierten Rückgewinnung von Wertstoffen und Energie aus hochmolekular vernetzten organischen Verbindungen, insbesondere aus Altreifen-, Dichtungsprofil- und sonstigen Kunststoffgranulaten, sowie eine Vorrichtung zur Durchführung des Verfahrens.

Die rohstoffliche Wiederverwertung von Abfällen und Reststoffen gewinnt auf Grund der zunehmenden Verknappung und der damit verbundenen Verteuerung von Rohstoffen, besonders der fossilen Energieträger immer mehr an Bedeutung. Der Erschließung neuer Energiequellen und Verfahren, besonders der erneuerbaren Energien wird zunehmend mehr Aufmerksamkeit und Unterstützung zuteil. Ein zunehmendes Interesse erfährt zur Zeit dabei die Pyrolysetechnologie, die sich speziell aber auf die Verwertung von nachwachsenden Biorohstoffen, wie zum Beispiel Holz, landwirtschaftlicher Abfälle oder aber auch auf Raps, Mais und andere Getreidearten konzentriert.

Dem Stand der Technik nach erfolgt die Einteilung der Pyrolyseverfahren in kontinuierliche und diskontinuierliche Verfahren. Der Ausführung der Apparate und Technologien nach erfolgt die Einteilung in
- Drehrohrofenverfahren und anderen sich drehenden Apparaten
- Wirbelschicht bzw. Fließbettverfahren
- Flugstromverfahren
- Schacht- und Vertikalreaktorverfahren.

Weiterhin erfolgt die Einteilung der bisher bekannten Pyrolyseverfahren in
- Niedertemperatur-
- Mitteltemperatur- (und)
- Hochtemperaturverfahren,
wobei weiterhin die Verfahren in Abhängigkeit der Betriebsdrücke unterschieden werden.

Trotz der sehr schnellen technischen und technologischen Entwicklung besteht weiterhin ein großer Bedarf an innovativen Weiterentwicklungen und Verknüpfungen mit bereits vorhandenen Grundverfahren und Technologien. Dabei kommt dem Einsatz von in der Praxis bewährten Apparaten und Ausrüstungen eine stetig steigende Bedeutung zu, weil dabei Synergieeffekte zu erwarten sind.

Die WO 00/64997 A1 offenbart ein Verfahren und eine Vorrichtung zur Umwandlung von Plastikabfällen in verbrennbare Kohlenwasserstoffe umfassend eine thermische Trennung bei etwa 450°C und Umgebungsdruck der Plastikabfälle sowie ihre Verflüssigung und nachfolgende Umwandlung in gasförmige Kohlenwasserstoffe.

Die EP 1 052 279 A1 beschreibt ebenfalls eine Vorrichtung zum Umwandeln von Plastikabfällen, bei der aus einer flüssigen Polymerphase eine Gaskomponente abgetrennt wird.

Aus der US 4,740,270 A, der US 4,648,328 A und der WO 00/53385 A1 sind Pyrolyseverfahren für Altreifen bekannt.

Die US 4,313,011 A beschreibt ein Verfahren zum Gewinnen von Kohlenwasserstoffen aus Pflanzen.

In der DE 196 20 378 A1 wird ein Pyrolysereaktor, insbesondere zur Konvertierung von Abfallfetten, beschrieben.

Die DE 197 07 306 A1 betrifft ein Verfahren zur Gewinnung von Mikrowachsen, Paraffinen und Ölen aus Altkunststoffen oder Altkunststoffgemischen.

Aufgabe der Erfindung ist es, ein energieautarkes, kontinuierlich arbeitendes mehrstufiges Pyrolyse verfahren und eine entsprechende Vorrichtung zur Durchführung der Pyrolyse gemäß dem Oberbegriff zu entwickeln.

Diese Aufgabe wird erfindungsgemäß dadurch gelöst, daß
- die organischen Verbindungen einen vertikalen, mehrstufigen Pyrolysereaktor von oben nach unten durchlaufen, wobei sie durch unterschiedlich einstellbare Verfahrenstemperaturen im Temperaturbereich von 300 bis 1.200°C und unterschiedlichen Verweilzeiten pyrolysiert werden, und in einem Separationsbereich mittels Unterdruck abgezogene Pyrolysedampf in einen mehrstufigen Kondensationsturm gefördert wird, wobei die Kondensation der Pyrolysedampfphasen zu Pyrolyseölen in den jeweiligen Kondensationsstufen in Mischphasen bei verschiedenen, produktbezogenen Temperaturen und unterhalb des normalen Atmosphärendrucks erfolgt,
- die organischen Verbindungen vor dem Pyrolysereaktor eine Vorbehandlungsstufe durchlaufen, wobei sie mit Pyrolyseölen aus den Kondensationsstufen vorgewärmt werden, dadurch an der Oberfläche depolymerisiert und damit klebrig werden, und mit einem pulverisierten Katalysatorgemisch bepudert werden, so daß der zugesetzte pulverförmige Mischkatalysator sich daran festsetzen kann, der den später nachfolgenden Krackprozeß zielgerichtet in Hinblick auf die Produktbildung beeinflußt,
- das bei dem Verfahren erzeugte energiereiche Permanentgas in einer Elektroenergieerzeugungseinheit in elektrische Energie und Wärmeenergie umgewandelt wird.

Während die organischen Verbindungen die einzelnen Pyrolysestufen des Reaktors durchlaufen, finden verschiedene Pyrolysereaktionen statt.

Bei den durch dieses Verfahren erzeugten Produkten handelt es sich um Ölgemische mit niedrigen, mittleren und hohen Siedepunkten, um ein niedermolekulares Permanentgas und um einen Pyrolysekoks, der in seinen physikalischen und chemischen Eigenschaften dem Petrolkoks sehr ähnelt.

Dadurch, daß die organischen Verbindungen vor dem Pyrolysereaktor eine Vorbehandlungsstufe durchlaufen, wobei sie mit Pyrolyseölen aus den Kondensationsstufen vorgewärmt werden, dadurch an der Oberfläche depolymerisiert und damit klebrig werden, und mit einem pulverisierten Katalysatorgemisch bepudert werden, kann der zugesetzte pulverförmige Mischkatalysator sich daran festsetzen, der den später nachfolgenden Krackprozeß zielgerichtet in Hinblick auf die Produktbildung beeinflußt.

Die hierbei erzeugte Elektro- und Wärmeenergie sichert die autarke Energieversorgung des Pyrolyseverfahrens.

Das Katalysatorgemisch bewirkt einerseits, daß am Entstehungsort der Pyrolysedämpfe der freiwerdende Schwefel gebunden und andererseits der Krackprozeß zielgerichtet eingeleitet wird.

Eine bevorzugte Ausführung der Erfindung besteht darin, daß die für den Pyrolyseprozeß erforderliche Wärmeenergie durch in der Vorrichtung selbst erzeugte Elektroenergie aus einer Elektroenergieerzeugungseinheit, vorzugsweise über elektrische Heizelemente, durch Mikrowellen-Magnetrone oder durch die Verbrennung des beim Verfahren entstehenden Permanentgases erzeugt wird.

Eine klassische Wärmeenergieerzeugung durch Verbrennung des im Prozeß entstehenden Permanentgases ist ebenfalls möglich, aber primär nicht angestrebt.

Es hat sich als vorteilhaft erwiesen, daß die Erwärmung der organischen Verbindungen indirekt über die Außenwand des Innenrohres des Pyrolysereaktors erfolgt.

Bei einer Vorrichtung zur Durchführung des erfindungsgemäßen Verfahrens ist es zweckmäßig, daß ein vertikaler, mehrstufiger Pyrolysereaktor vorgesehen ist, der von organischen Verbindungen von oben nach unten durchlaufbar ist und bei dem stufenweise unterschiedliche Verfahrenstemperaturen von 300 bis 1.200°C einstellbar sind, daß ein Separationsbereich vorgesehen ist, in dem Mittel zum Abziehen von Pyrolysedampf mittels Unterdruck und zum Fördern des Pyrolysedampfes in einen mehrstufigen Kondensationsturm aufweist, daß vor dem Pyrolysereaktor eine Vorbehandlungsstufe mit Mitteln zum Vorwärmen der organischen Verbindungen mit Pyrolyseölen aus den Kondensationsstufen und mit Mitteln zum Bepudern mit einem pulverisierten Katalysatorgemisch angeordnet ist, und daß eine Elektroenergieerzeugungseinheit zum Umwandeln des bei dem Verfahren erzeugten energiereichen Permanentgases in elektrische Energie und Wärmeenergie vorgesehen ist.

Eine bevorzugte Ausführung der Erfindung besteht darin, daß das entstehende Pyrolysedampfgemisch in einem mehrstufigen Einspritzkondensatorturm selektiert und produktorientiert schnell und gezielt kondensiert wird, um eine erneute Bildung von langkettigen Kohlenwasserstoffverbindungen zu vermeiden.

Es ist zur Erfindung gehörig, dass als Pyrolysereaktor ein vertikales Druckgefäß mit einem minimalen Nenndruck von PN 16 verwendet wird, dessen Form vorzugsweise zylindrisch, alternativ aber auch oval oder quaderförmig ausgeführt sein kann und aus mehreren übereinander angeordneten Pyrolysezonen besteht.

In diesem Zusammenhang ist es vorteilhaft, daß Mittel zur indirekten elektrischen Beheizung des Innenrohres des Pyrolysereaktors vorgesehen sind und daß zur Absaugung der entstehenden Pyrolysedämpfe durch Unterdruck ein Schlitzsystem auf der Mantelfläche der inneren Einbauten vorgesehen ist.

Ebenfalls ist zur Erfindung gehörig, dass sich im Inneren des Pyrolysereaktors konzentrisch angeordnete innere Einbauten befinden, die einerseits den Granulatfluß lenken und andererseits die Ableitung der Pyrolysedämpfe aus dem Reaktor ermöglichen.

Es hat sich als vorteilhaft erwiesen, dass der äußere Mantel des Reaktors in Kesselblech H II o.a. Werkstoffen ausgeführt wird, der Innenmantel und die Einbauten sowie das Dampfabzugsrohr aus wärmebeständigem Werkstoff wie z.B. 1,4828, AVESTA 253, 353 MA, Nicrofer 45 TV oder ähnlichen Werkstoffen gefertigt werden, sodass Betriebstemperaturen von bis zu 1.200°C erreichbar sind.

Weiterhin zur Erfindung gehörig ist es, dass der Granulatein- und Austrag über ein getaktetes Schleusensystem erfolgt, das über automatisch kontrollier- und regelbare Inertisierungseinrichtungen verfügt und dass über die frei wählbare Taktfrequenz des Schleusensystems die Durchsatzmenge im Pyrolysereaktor geregelt wird.

Zur Erfindung gehörig ist weiterhin, daß jedem Pyrolysemodul eine Einspritzkondensationseinheit zugeordnet ist, die aus mindestens zwei, vorzugsweise drei bis vier Einzelstufen (8, 9, 10) besteht, welche räumlich miteinander verbunden sind und vorzugsweise übereinander aber auch nebeneinander angeordnet sein können und in denen die Pyrolysedampfgemische selektiert und kondensisert werden.

Es hat sich als vorteilhaft erwiesen, dass zu jeder Kondensationsstufe ein außenliegender Wärmetauscher, eine Kreislauf-/ Einspritzpumpe ein Vakuumerzeuger, sowie Rohrleitungen mit entsprechenden Armaturen zugeordnet werden.

Es ist zur Erfindung gehörig, dass die Kondensationsstufen bevorzugt kreisförmig ausgeführt werden und im Inneren sich konzentrisch angeordnete Spiral- Einspritzdüsen wahlweise Tangentialdüsen, Leitrohre und Demister befinden.

Als besonders vorteilhaft hat sich die Ausführung der ersten Kondensationsstufe aus zwei Aggregaten erwiesen, einem liegenden unteren Behälter und einem darauf vertikal stehenden Kondensator mit einer im Inneren integrierten Flüssigkeitsstrahl- Vakuumpumpe und einem Leitrohr.

Ebenfalls zur Erfindung gehörig ist es, daß jedem Pyrolysemodul, bestehend aus Vorbehandlungs-, Pyrolyse-, Kondensations-, Fettstoffbehandlungs-, Öl- und Gasbehandlungsstufe, eine Energieerzeugungseinheit zugeordnet wird.

Beispielsweise besteht diese Energieerzeugungseinheit aus einem Gasmotor mit angekuppeltem Wechselstromgenerator, einer Wärmerückgewinnungseinrichtung sowie diversen Regel- und Steuerungseinrichtungen, die eine autarke Energieversorgung des Pyrolysemoduls ermöglichen.

Es liegt auch im Rahmen der Erfindung, daß die bei der Verbrennung des Permanentgases im Gasmotor entstehenden Abgasen eine Abgasreinigungsstufe, bestehend aus Ruß- und Feinstaubpartikelfilter, Katalysator und Schalldämpfer durchlaufen, so dass sie die zur Zeit geforderten EU-Abgasnormen sicher erfüllen.

Auch zur Erfindung gehörig ist es, dass das kontinuierlich arbeitende Pyrolyseverfahren abfallfrei arbeitet, und es sich bei allen entstehenden Produkten um wiederverwertbare Werkstoffe und nicht um Abfälle handelt.

Zusammenfassend werden im Rahmen der Erfindung ein energieautarkes, mehrstufiges, kontinuierlich arbeitendes Mitteltemperaturpyrolyseverfahren und eine Vorrichtung in Modulbauweise geschaffen, die es ermöglichen, aus rieselfähigen, hochmolukulare vernetzten organischen Verbindungen, insbesondere Altreifen-, Dichtungsprofil- und sonstiger Plastikgranulate im Sinne einer rohstofflichen Wiederverwertung gasförmige, flüssige oder feste Recyclate für die Gummi-, Kunststoff- und Erdölindustrie zurück zu gewinnen.

Nachfolgend wird ein Ausführungsbeispiel der Erfindung anhand von Zeichnungen und Tabellen beschrieben.

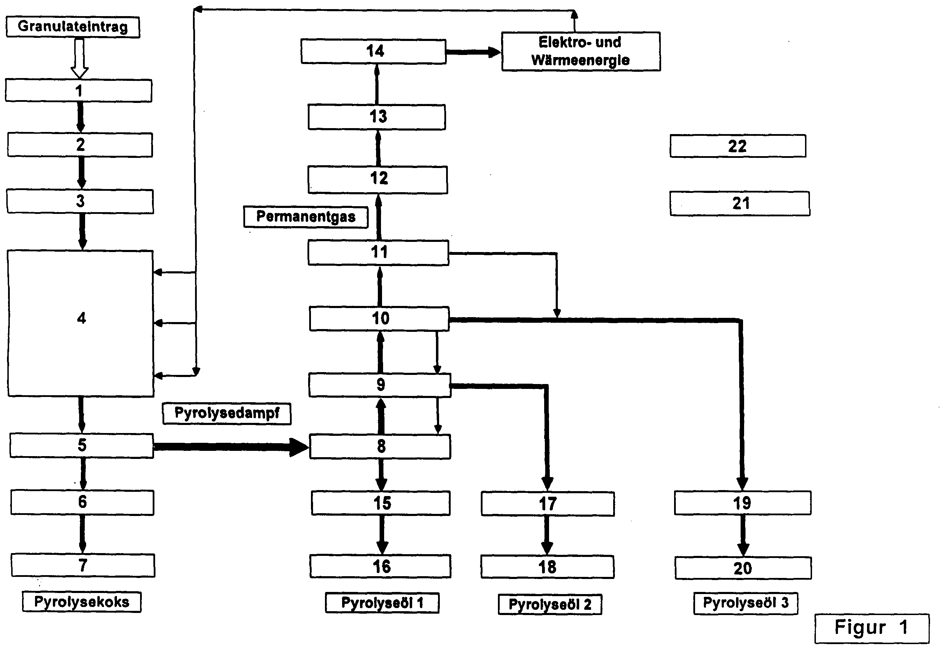

Es zeigen
- Fig. 1: ein Blockschaltbild.

Wie aus Fig. 1 ersichtlich, durchlaufen die organischen Verbindungen, bei denen es sich im gezeigten Beispiel um Gummi- oder Kunststoffgranulate handelt, in der erfindungsgemäßen Vorrichtung eine Bevorratungseinrichtung 1, eine Dosiereinrichtung 2 und eine Vorbehandlungsstufe 3. Der Granulatein- und -austrag erfolgt vorzugsweise über ein getaktetes Zellradschleusensystem, das über automatisch kontrollier- und regelbare Inertisierungseinrichtungen verfugt, wobei über die Taktfrequenz bzw. über eine Drehzahlregulierung des Schleusensystems die Durchsatzmenge und die Verweilzeit im Pyrolysereaktor geregelt wird.

In der Vorbehandlungsstufe 3 werden die Granulate mit Pyrolyseöl aus den Kondensationsstufen der Anlage vorgewärmt, dadurch an der Granulatoberfläche depolymerisiert und damit klebrig wird, so dass ein in der Vorbehandlungsstufe 3 zugesetzter pulverförmiger Mischkatalysator an der Granulatoberfläche anhaften kann
Anschließend durchlaufen die Granulate einen vertikalen, mehrstufigen Pyrolysereaktor 4 gravimetrisch von oben nach unten, wobei sie bevorzugt durch elektrische Heizelemente oder aber durch Mikrowellenmagnetrone in den unterschiedlichen übereinander angeordneten Pyrolysezonen auf individuell regelbare Verfahrenstemperaturen von 300 bis 1200 °C erwärmt werden können. Durch eine Temperatur- und Unterdruckregelung ist es möglich, die Pyrolyseproduktaufteilung, also die entstehenden Massenanteilen an Koks, Öl- und Permanentgas in definierten Grenzen zu steuern.

Da sich bei der Pyrolyse explosionsfähige Gasgemische bilden, wird der Pyrolysereaktor vorzugsweise als Druckgefäß in einer Nenndruckstufe PN 16 ausgeführt, wobei sich auch durchaus andere Nenndruckstufen aus dem Produkt Nenndruck x Volumeninhalt ergeben können.

Die Granulate bilden im oberen Teil des Pyrolysereaktors 4 eine gleichmäßige Schüttschicht, die aber beim gravimetrischen Durchlauf durch innere Einbauten in den Reaktorstufen intensiv durchmischt wird, so daß sich ein fast gleichmäßiges Temperaturprofil in der Schüttung bildet. Die inneren Einbauten sind weiterhin so gestaltet, dass sich auf ihrer Mantelfläche Schlitzsysteme befinden, die einerseits die Absaugung der entstehenden Pyrolysedämpfen mittels Vakuumpumpen ermöglichen und andererseits das Eindringen von Granulaten oder von Abrieb in die Dampfabzugsleitung verhindern.

Der im Pyrolysereaktor 4 entstehende feste, kohlenstoff- und füllstoffreiche Pyrolysekoks wird im unteren Teil, im Separationsbereich 5 (Trennung von Pyrolysefeststoff von Pyrolysedampf), kontinuierlich über ein inertisierbares Schleusensystem abgezogen. Der Pyrolysekoks wird vorzugsweise in der vorliegenden Form als Adsorptionsmittel mit einer BET-Oberfläche von 80-120 m²/g über eine Kühlvorrichtung 6 zur Pyrolysekokslagerung 7 hin abgezogen. Alternative Verwendungen sind der Einsatz in der Stahlindustrie als Hochofenkoks oder die Nutzung als Füllstoff für die Reifenherstellung bzw. Dichtungs- und Isolierstoffherstellung.

Der im Separationsbereich 5 (11) mittels Unterdruck abgezogene Pyrolysedampf wird in den mehrstufigen Kondensationsturm 8,9,10 gefördert. Die Kondensation der Pyrolysedampfphasen erfolgt in den jeweiligen Kondensationsstufen in Mischphasen bei verschiedenen, produktbezogenen Temperaturen und unterhalb des normalen Atmosphärendruckes.

In der ersten Kondensationsstufe 8 erfolgt durch die Einspritzung eines Teils des Rücklaufes der zweiten Stufe 9 im Gegenstromverfahren die Kondensation der schweren Ölfraktionen.

Die Kondensationsstufen 9 und 10 arbeiten nach dem gleichen Prinzip der Rücklaufeinspritzung mittels Hochdruckspiraldüsen. Durch das Katalysatorgemisch, den gewählten Betriebstemperaturen und Drücken, dem Rückflußverhältnis sowie den Verweilzeiten im Kondensationsturm erfolgt eine selektierte und produktorientierte Aufspaltung der Pyrolyseöle analog einer Rektifikationsanlage. Im Kopfteil der Kondensationsstufe 10 sind Wärmeaustauschflächen installiert, die eine Vorkondensation des restlichen Pyrolysedampfes bewirken. In der sich daran anschließenden Separationseinrichtung 11 erfolgt die Trennung des Permanentgases vom Leichtöl. Eine nachgeschaltete Kühleinrichtung 12 sorgt aus Sicherheitsgründen für die Einhaltung einer maximalen Permanentgastemperatur von 40°C. Um technologisch bedingte Mengen- und Heizwertschwankungen des Permanentgases ausgleichen zu können, erfolgt eine Zwischenspeicherung des Gases in einem Behälter 13. Die Pyrolyseölfraktionen aus der ersten Kondensationsstufe 8 werden über eine Kühlung 15 in eine Lagerung 16 überführt, diejenigen aus der zweiten Kondensationsstufe 9 über eine Kühlung 17 in eine Lagerung 18 und diejenigen aus der dritten Kondensationsstufe 10 über eine Kühlung 19 in eine Lagerung 20.

Die weitere Verwertung des Permanentgases geschieht in einer Kraft-Wärme-Kopplungseinheit 14. Die für den endotherm verlaufenden Pyrolyseprozeß erforderliche Energieversorgung erfolgt aus Kostengründen bevorzugt über eine als handelsüblichen Gasmotor / Wechselstromgenerator ausgebildete Kraft-Wärme-Kopplungseinheit 14, wobei die Nutzung einer Gasturbine prinzipiell möglich wäre, wenn eine den Erfordernissen passende Baugröße zur Verfügung steht.

Es sind weiterhin ein Prozeßleitsystem 21 zur Steuerung der Vorrichtung und des Prozesses, sowie eine Betriebs- und Hilfsmittelversorgung 22 vorgesehen.

Mit der erfindungsgemäßen Vorrichtung können z.B. aus rieselfähigen Altreifengranulaten, deren typische Zusammensetzung wie folgt ist:

| | | |
|---|---|---|
| Naturkautschuk | 14 .... 42 | Gew. % |
| Synthesekautschuk | 18 .... 26 | Gew. % |
| Gummiregenerat | .... 5 | Gew. % |
| Füllstoffe (Ruß+ Siliziumverb.) | 28 .... 44 | Gew. % |
| Weichmacher | 3 .... 4 | Gew. % |
| Vernetzungsmittel | ..... 1,5 | Gew. % |
| Dispergiermittel | .... 1.2 | Gew. % |
| Alterungsschutzmittel | .... 1,2 | Gew. % |
| Lichtschutzwachse | ..... 1 | Gew. % |
| Vulkanisationsbeschleuniger | ..... 1 | Gew. % |
| sonstige Stoffe | ..... 3 | Gew. % |

folgende Pyrolyseprodukte (mit den jeweiligen Anteilen an den insgesamt entstehenden Pyrolyseprodukten und dem unteren Heizwert) geschaffen werden:

| | | | |
|---|---|---|---|
| Pyrolysekoks | 30 ..... 52 | Gew. % | Hᵤ 23 .... 30 000 kJ / kg |
| Pyrolyseöle | 30 ..... 50 | Gew. % | Hᵤ 36 ..... 46000 kJ / kg |
| Pyrolysegas | 8 ..... 30 | Gew. % | Hᵤ 38 ..... 45 800 kJ / Nm³ |

In einer Technikumsanlage wurde folgende Zusammensetzung der Pyrolyseprodukte ermittelt:

| | | | |
|---|---|---|---|
| Pyrolysekoks | ca. | 38 | Gew. % |
| Pyrolyseöle | ca. | 50 | Gew. % |
| Pyrolysegas | ca. | 12 | Gew. %, |

wobei das Pyrolysegas (Permanentgas) folgende Zusammensetzung aufwies:

| | | | |
|---|---|---|---|
| Methan | ca. | 30 | Vol. % |
| Wasserstoff | ca. | 16 | Vol. % |
| Butadien 1, 3 | ca. | 8 | Vol. % |
| Ethen | ca. | 6 | Vol. % |
| Ethan | ca. | 5 | Vol. % |
| Kohlendioxyd | ca. | 4,6 | Vol. % |
| Kohlenmonoxyd | ca. | 3 | Vol. % |
| Butan | ca. | 2,5 | Vol. % |
| Propan | ca. | 2 | Vol. % |
| Propen | ca. | 2 | Vol. % |
| Schwefelwasserstoff | ca. | 0, 4 | Vol. % |
| Rest sonstige Verbindungen | | | |
| Unterer Heizwert | Hᵤ ca. | 44 800 | kJ/Nm³ |

Das Rohpyrolyseöl wies folgende Zusammensetzungen auf:

| | | |
|---|---|---|
| Benzol | ...... 10 | Gew. % |
| Xylol | ...... 8 | Gew. % |
| Toluol | 0,5 ..... 5 | Gew. % |
| Styrol | 1 ..... | Gew. % |
| C₅ Verbindungen | 1 ...... 5 | Gew. % |
| Ethylbenzol | 0,5 ..... 4 | Gew. % |
| Naphthaline | 0,5 ..... 5 | Gew. % |
| Indan / Inden | 0,5 ..... 3 | Gew. % |

Die erfindungsgemäße Vorrichtung ist modular aufgebaut, so daß sie problemlos den kapazitiven Anforderungen angepaßt und erweitert werden kann, ohne daß es zu Produktionsausfällen kommt.

## Patentansprüche

1. Pyrolyseverfahren zur fraktionierten Rückgewinnung von Wertstoffen und Energie aus rieselfähigen, hochmolekular vernetzten organischen Verbindungen, insbesondere Altreifen-, Dichtungsprofil- und sonstiger Plastikgranulate im Sinne einer rohstofflichen Wiederverwertung in gasförmige, flüssige und feste Recyclate, **dadurch gekennzeichnet, daß**
• die organischen Verbindungen einen vertikalen, mehrstufigen Pyrolysereaktor (4) von oben nach unten durchlaufen, wobei sie durch unterschiedlich einstellbare Verfahrenstemperaturen im Temperaturbereich von 300 bis 1.200°C und unterschiedlichen Verweilzeiten pyrolysiert werden, und in einem Separationsbereich (5) der mittels Unterdruck abgezogene Pyrolysedampf in einen mehrstufigen Kondensationsturm (8, 9, 10) gefördert wird, wobei die Kondensation der Pyrolysedampfphasen zu Pyrolyseölen in den jeweiligen Kondensationsstufen (8, 9, 10) in Mischphasen bei verschiedenen, produktbezogenen Temperaturen und unterhalb des normalen Atmosphärendrucks erfolgt,
• die organischen Verbindungen vor dem Pyrolysereaktor (4) eine Vorbehandlungsstufe (3) durchlaufen, wobei sie mit Pyrolyseölen aus den Kondensationsstufen (8, 9, 10) vorgewärmt werden, dadurch an der Oberfläche depolymerisiert und damit klebrig werden, und mit einem pulverisierten Katalysatorgemisch bepudert werden, so daß der zugesetzte pulverförmige Mischkatalysator sich daran festsetzen kann, der den später nachfolgenden Krackprozeß zielgerichtet in Hinblick auf die Produktbildung beeinflußt,
• das bei dem Verfahren erzeugte energiereiche Permanentgas in einer Elektroenergieerzeugungseinheit (14) in elektrische Energie und Wärmeenergie umgewandelt wird.

2. Pyrolyseverfahren gemäß Anspruch 1, **dadurch gekennzeichnet, daß** die für den Pyrolyseprozeß erforderliche Wärmeenergie durch in der Vorrichtung selbst erzeugte Elektroenergie aus einer Elektroenergieerzeugungseinheit (14), vorzugsweise über elektrische Heizelemente, durch Mikrowellen-Magnetrone oder durch die Verbrennung des beim Verfahren entstehenden Permanentgases erzeugt wird.

3. Vorrichtung zum Durchführen des Verfahren gemäß Anspruch 1 oder Anspruch 2, **dadurch gekennzeichnet, daß** ein vertikaler, mehrstufiger Pyrolysereaktor (4) vorgesehen ist, der von organischen Verbindungen von oben nach unten durchlaufbar ist und bei dem stufenweise unterschiedliche Verfahrenstemperaturen von 300 bis 1.200°C einstellbar sind, daß ein Separationsbereich (5) vorgesehen ist, in dem Mittel zum Abziehen von Pyrolysedampf mittels Unterdruck und zum Fördern des Pyrolysedampfes in einen mehrstufigen Kondensationsturm (8, 9, 10) aufweist, daß vor dem Pyrolysereaktor (4) eine Vorbehandlungsstufe (3) mit Mitteln zum Vorwärmen der organischen Verbindungen mit Pyrolyseölen aus den Kondensationsstufen (8, 9, 10) und mit Mitteln zum Bepudern mit einem pulverisierten Katalysatorgemisch angeordnet ist, und daß eine Elektroenergieerzeugungseinheit (14) zum Umwandeln des bei dem Verfahren erzeugten energiereichen Permanentgases in elektrische Energie und Wärmeenergie vorgesehen ist.

4. Vorrichtung gemäß Anspruch 3, **dadurch gekennzeichnet, daß** Mittel zur indirekten elektrischen Beheizung des Innenrohres des Pyrolysereaktors (4) vorgesehen sind und daß zur Absaugung der entstehenden Pyrolysedämpfe durch Unterdruck ein Schlitzsystem auf der Mantelfläche der inneren Einbauten vorgesehen ist.

5. Vorrichtung gemäß Anspruch 3, **dadurch gekennzeichnet, daß** eine erste Kondensationsstufe (8) aus zwei Aggregaten besteht, einem liegenden unteren Behälter und einem darauf vertikal stehenden Kondensator mit einer im Inneren integrierten Flüssigkeitsstrahl- Vakuumeinrichtung und einem Leitrohr.

6. Vorrichtung gemäß Anspruch 3, **dadurch gekennzeichnet, daß** jedem Pyrolysemodul eine Einspritzkondensationseinheit zugeordnet ist, die aus mindestens zwei, vorzugsweise drei bis vier Einzelstufen (8, 9, 10) besteht, welche räumlich miteinander verbunden sind und vorzugsweise übereinander aber auch nebeneinander angeordnet sein können und in denen die Pyrolysedampfgemische selektiert und kondensiert werden.

## Claims

1. A pyrolysis process for the fractionated recovery of valuable substances and energy from free-flowing, cross-linked organic compounds of high molecular weights, in particular granules of used tires, sealing profiles and other plastic materials, in the sense of feedstock recycling into gaseous, liquid and solid recyclates, **characterised in that**
• the organic compounds pass through a vertical, multi-stage pyrolysis reactor (4) from the top to the bottom, wherein they are pyrolysed by process temperatures that can be set to different values in the temperature range from 300 to 1,200°C and different residence times, and in a separation region (5) the pyrolysis vapour that is drawn off by means of negative pressure is conveyed into a multi-stage condensation tower (8, 9, 10), wherein the condensation of the pyrolysis vapour phases into pyrolysis oils takes place in the respective condensation stages (8, 9, 10) in mixed phases at various product-related temperatures and below the normal atmospheric pressure,
• the organic compounds pass through a pretreatment stage (3) upstream of the pyrolysis reactor (4), wherein they are preheated with pyrolysis oils from the condensation stages (8, 9, 10), being depolymerised at the surface and therefore becoming tacky as a result, and are dusted with a powdered catalyst mixture so that the added mixed catalyst powder can stick thereto, said mixed catalyst powder having a targeted effect on the subsequent cracking process in terms of product formation,
• the energy-rich permanent gas generated during the process is converted in an electrical energy generating unit (14) to electrical energy and thermal energy.

2. The pyrolysis process according to claim 1, **characterised in that** the thermal energy needed for the pyrolysis process is generated by electrical energy generated in the apparatus itself from an electrical energy generating unit (14), preferably by way of electrical heating elements, by microwave magnetrons or by the combustion of the permanent gas formed during the process.

3. An apparatus for carrying out the process according to claim 1 or claim 2, **characterised in that** a vertical, multi-stage pyrolysis reactor (4) is provided, through which organic compounds can pass from the top to the bottom and in which different process temperatures from 300 to 1,200°C can be incrementally set, **in that** a separation region (5) is provided, which comprises means for extracting pyrolysis vapour by means of negative pressure and for conveying the pyrolysis vapour into a multi-stage condensation tower (8, 9, 10), **in that** a pretreatment stage (3) having means for preheating the organic compounds with pyrolysis oils from the condensation stages (8, 9, 10) and having means for dusting with a powdered catalyst mixture is arranged upstream of the pyrolysis reactor (4) and **in that** an electrical energy generating unit (14) is provided for converting the energy-rich permanent gas generated during the process into electrical energy and thermal energy.

4. The apparatus according to claim 3, **characterised in that** means for the indirect electrical heating of the internal tube of the pyrolysis reactor (4) are provided and that, to suck away the resulting pyrolysis vapours by means of negative pressure a slot system is provided on the cylindrical surface of the internal installations.

5. The apparatus according to claim 3, **characterised in that** a first condensation stage (8) consists of two units, a horizontal lower vessel and a vertical condenser standing thereon having a liquid jet vacuum device integrated into the interior and a guide tube.

6. The apparatus according to claim 3, **characterised in that** each pyrolysis module is assigned an injection condensation unit which consists of at least two, preferably three to four, individual stages (8, 9, 10), which are spatially connected to each other and can preferably be arranged one on top of another but can also be arranged next to each other and in which the pyrolysis vapour mixtures are selected and condensed.

## Revendications

1. Procédé de pyrolyse pour la récupération fractionnée de matériaux et d'énergie à partir de composés organiques réticulés à haut poids moléculaire et pouvant s'écouler librement, en particulier de granulés de pneus usagés, granulés de profil d'étanchéité et d'autres granulés plastiques, dans le sens d'un recyclage de matière première en recyclats gazeux, liquides et solides, **caractérisé en ce que**
- les composés organiques passent de haut en bas à travers un réacteur de pyrolyse (4) vertical à plusieurs étages, en étant pyrolysés à des températures de processus réglables différemment dans la plage de températures allant de 300 à 1 200 °C et avec des temps de passage différents, et, dans une zone de séparation (5), la vapeur de pyrolyse aspirée par dépression est transportée dans une tour de condensation (8, 9, 10) à plusieurs étages, la condensation des phases vapeur de pyrolyse en huiles de pyrolyse dans les étages de condensation respectifs (8, 9, 10) ayant lieu en phases mixtes à différentes températures dépendantes du produit et à une pression inférieure à la pression atmosphérique normale,
- les composés organiques passent par une étape de prétraitement (3) avant le réacteur de pyrolyse (4), où ils sont préchauffés avec des huiles de pyrolyse provenant des étapes de condensation (8, 9, 10), devenant ainsi dépolymérisés en surface et donc collants, et sont poudrés avec un mélange catalyseur pulvérisé, de sorte que le catalyseur mixte pulvérisé ajouté peut y adhérer et influence, dans le sens de la formation du produit, le processus de craquage qui suit,
- le gaz permanent hautement énergétique produit au cours du processus est converti en énergie électrique et en énergie thermique dans une unité de production d'énergie électrique (14).

2. Procédé de pyrolyse selon la revendication 1, **caractérisé en ce que** l'énergie thermique nécessaire au procédé de pyrolyse est produite par de l'énergie électrique autogénérée dans l'appareil à partir d'une unité de production d'énergie électrique (14), de préférence par le biais d'éléments chauffants électriques, de magnétrons à micro-ondes, ou par la combustion du gaz permanent produit pendant le procédé.

3. Dispositif pour la mise en oeuvre du procédé selon la revendication 1 ou la revendication 2, **caractérisé en ce qu'il** est prévu un réacteur de pyrolyse (4) vertical à plusieurs étages, qui peut être traversé du haut vers le bas par des composés organiques et dans lequel différentes températures de procédé peuvent être réglées par paliers entre 300 et 1 200 °C, **en ce qu'**il est prévu une zone de séparation (5) dans laquelle sont prévus des moyens pour aspirer la vapeur de pyrolyse par dépression et pour transporter la vapeur de pyrolyse dans une tour de condensation (8, 9, 10) à plusieurs étages, **en ce qu'**un étage de prétraitement (3) est disposé en amont du réacteur de pyrolyse (4) avec des moyens pour préchauffer les composés organiques avec des huiles de pyrolyse provenant des étages de condensation (8, 9, 10) et avec des moyens de poudrage avec un mélange catalyseur pulvérisé, et **en ce qu'**il est prévu une unité de production d'énergie électrique (14) pour convertir le gaz permanent hautement énergétique produit pendant le processus en énergie électrique et en énergie thermique.

4. Dispositif selon la revendication 3, **caractérisé en ce que** des moyens sont prévus pour le chauffage électrique indirect du tube intérieur du réacteur de pyrolyse (4), et **en ce qu'**un système de fentes est prévu sur la l'enveloppe des éléments internes pour l'aspiration par dépression des vapeurs de pyrolyse produites.

5. Dispositif selon la revendication 3, **caractérisé en ce qu'un** premier étage de condensation (8) est constitué de deux agrégats, un récipient inférieur couché et un condenseur placé verticalement par-dessus, avec un dispositif de vide par jet de liquide intégré à l'intérieur et un tube guide.

6. Dispositif selon la revendication 3, **caractérisé en ce qu'à** chaque module de pyrolyse est associée une unité de condensation par injection constituée d'au moins deux, de préférence trois à quatre, étages individuels (8, 9, 10) qui sont reliés spatialement les uns aux autres, et qui peuvent être disposés de préférence les uns au-dessus des autres, mais aussi les uns à côté des autres, et dans lesquels les mélanges de vapeur de pyrolyse sont sélectionnés et condensés.
